# EUROPEAN PATENT SPECIFICATION

(11) **EP 3 966 076 B1**
(45) Date of publication and mention of the grant of the patent: **27.08.2025**
(21) Application number: 20726712.1
(22) Date of filing: 06.05.2020
(51) Int. Cl.: B60R 21/23, B60R 21/2338, B60R 21/237, B60R 21/207

(54) **VEHICLE SEAT ARRANGEMENT**
FAHRZEUGSITZANORDNUNG
AGENCEMENT DE SIÈGE DE VÉHICULE

(30) Priority: 10.05.2019 DE 102019112344
(43) Date of publication of application: 16.03.2022
(73) Proprietor: Autoliv Development AB, 447 83 Vårgårda (SE)
(72) Inventor: ADOLPH, Oliver, 85241 Hebertshausen (DE); UNGER, Johann, 85296 Rohrbach (DE); REITER, Thomas, 85256 Vierkirchen (DE)
(74) Representative: Feucker, Max Martin
(86) International application number: PCT/EP2020/062489
(87) International publication number: WO 2020/229242

(56) References cited:
- WO-A1-2017/179839
- KR-A- 20170 051 824
- US-A- 5 765 863
- US-A- 6 029 993
- US-A1- 2013 079 208
- US-A1- 2015 183 393
- US-A1- 2018 326 938

## Description

The present invention relates to a vehicle seat arrangement for a motor vehicle, with a backrest, a seat cushion, at least one airbag module, the airbag module being arranged on a lateral side of the backrest and/or seat cushion and the at least one airbag module comprising at least one airbag, wherein the airbag is made of a first layer and a second layer, the first layer facing an occupant when the airbag is inflated, and a tether mechanism for the airbag module, the tether mechanism comprising at least one tether arrangement, the tether arrangement being fixed at least to the airbag and additionally to the seat cushion and/or to the backrest.

A vehicle seat arrangement with the above features is known from EP 3 192 706 A1. The tether arrangement for each airbag extends along the outer lateral side of the inflated airbag, so that the airbag and the tether arrangement holding the inflated airbag are embodied to protect the passenger against a side impact. In order to protect the passenger in case of a front impact, an additional conventional airbag, i.e. in the dashboard of the vehicle or in the steering wheel, is needed. But, in future (self-driving vehicles) the seat might not be directed in the longitudinal direction of the vehicle, so that additional protection is needed. In order that the inflated airbag has a respective shape in the inflated state in order to extend in front of the shoulder of the passenger a complicated production structure is necessary. More than two layers may be necessary to form such three dimensional shape of the inflated airbag. Furthermore, the inflated airbag has a comparatively high volume, which is not necessary for the protection. Additionally, the airbag inflates completely at high speed. Further vehicle seat arrangements are known from US 2018/326938 A1, US 2013/079208 A2, WO 2017/179839 A1, KR 2017 0051824 A and US 2015/183393 A1. A vehicle seat arrangement with the features of the preamble of claim 1 is known from US 6 029 993 A.

Accordingly, it is an object of the present invention, to provide a vehicle seat arrangement, with which the passenger is protected in different kind of impact situations, even if the seat is not aligned in the longitudinal direction of the vehicle. In particular, a vehicle seat arrangement shall be provided, for which the airbag is easier to produce, which airbag has a smaller volume when assembled in the backrest and/or which deployment sequence is enhanced.

This object is solved by a vehicle seat arrangement with the features of the independent claim. Preferred embodiments of the vehicle seat arrangement are subject matter of the dependent claims and the complete description, wherein single features of the preferred embodiments can be combined with each other in a technical meaningful manner.

In particular, the object is achieved with a vehicle comprising the above features, wherein the first layer and the second layer of the airbag have the same shape and are connected to each other at least on the periphery and wherein the airbag has a first section connected to the seat cushion and/or to the back rest and a second section, wherein in an uninflated but unrolled state of the airbag the second section is at least partly folded onto the first section forming a first folding line.

With other words, it is suggested, that the outer shell of the airbag is made of only two layers, which have the same outer shape when laid flat. For example, two identical webbings may be connected at their peripheral edge to each other. Alternatively, the airbag may be made of a so called one-piece-woven,

in which the two layers are formed at the same time, wherein their peripheral and eventually further connections to each other are produced in the production process. Of course, the two layers may be connected to each other within the periphery.

In the uninflated but unrolled state, meaning that the airbag is completely produced but not yet assembled into the backrest and/or seat cushion, the airbag has already one folding line, which was formed by folding the second section on the first section of the airbag. The first folding line is secured by connecting the second section of the airbag to the first section of the airbag. For example, this may be achieved, if an end of the second section facing initially away from the first section and/or an intermediate part of the second section is connected (i.e. by sewing) to the first section. In this regard, the second section may be connected to the first layer of the first section only.

It is also possible that the second section is connected (i.e. by sewing) to the first section at at least one location close to the folding line. In particular, the second section may be connected to the first section at one or more single points or at a line along (parallel) to the folding line. These connection (sewing) may also connect the first layer to the second layer as well as in the first section as in the second section. By embodying the first folding line the inflation direction of at least the second section of the airbag during deployment is defined, so that the second section inflates to the front of the passenger.

The connection (sewing) for defining the first folding line preferably connects the first and second layer of the second section to the first and second layer of the first section. In a preferred embodiment, the connection (line) between the first section and the second section along (parallel to) the folding line extends from 1/8 to 1/2 or preferable from 1/4 to 1/3 of the length of the first folding line along the folding line, so that by the connection also the gas flow rate from the first section to the second section during deployment is preset.

Preferably, the second section is folded along the first folding line onto the first section in such a way, that the fist layer of the second section faces the first layer of the first section, thereby achieving that the second section deploys towards or in front of the passenger during deployment. The first folding line is therefore arranged in such a location of the airbag that the second section deploys to the front of the passenger.

In a preferred embodiment, the second section comprises a first subsection and a second subsection, wherein in the uninflated but unrolled state of the airbag the second subsection is folded onto the first subsection forming a second folding line. The second subsection is preferable folded in such a way onto the first subsection, that the second layer of the second subsection faces the second layer of the first subsection. The airbag is therefore zig-zag folded by the first and second folding line. The second folding line is secured in that the second subsection is connected to the first subsection or to the first section of the airbag. For example, a (initially free) end of the initially (not yet folded) second subsection is connected (i.e. by sewing) to the first section or to the second subsection. In this regard it is preferred, that the end of the second subsection is connected in a region close to the first folding line. In particular, the end may be connected with the same connection means which forms the first folding line.

Alternatively or additionally the second folding line may be secured by one or multiple connection means (connection point or connection line), which are arranged close to the second folding line and which connect (i.e. by sewing) the first layer to the second layer. These connection means may also connect the second section near the second folding line to the first layer only within the first section. Preferably, the connection line for forming the second folding line may extend from 1/4 to 3/4 or preferable from 1/3 to 1/2 of the length of the second folding line along the second folding line. This way the gas flow rate from the first subsection to the second subsection during deployment may be preset.

In one embodiment the free length of the first folding line, meaning the length at which the second section is not connected to the first section close to the first folding line and which is therefore free to allow gas flow from the first section to the second section during deployment, is greater, preferable at least 20%, more preferably at least 40% greater than the free length of the second folding line. This way it is made sure, that during deployment the first section is initially deployed completely before the first subsection is deployed completely, wherein the second subsection is deployed completely after the first subsection.

In order to additionally provide a deployment direction of the airbag during deployment, it is suggested that a bending line preferably within the first section is embodied, wherein the bending line is in particular embodied by connecting (sewing) a part of the first layer within the first section to a further part of the first layer within the first section. This way the effective length of the first layer of the first section from its connection to the backrest to the first folding line is shorter than the effective length of the second layer of the first section. The bending line may divide the first section in a first subpart and a second subpart. By embodying such a bending line the second subpart and the therewith linked second section bend towards the passenger during deployment. The second folding line and the bending line may be formed by the same connection means. In the inflated state the bending line may extend vertically within the first section.

Preferably the airbag is configured that in an inflated state of the airbag the first section is located laterally to the passenger and in front of a shoulder of the passenger and wherein the second section is located in front of the chest and/or head of the passenger. In particular, the first subpart of the first section is located laterally to the passenger, the second subpart of the first section is located in front of the shoulder of the passenger and wherein the second subsection of the second section is located in front of the chest and/or head of the passenger, the first subsection of the second section linking the second subpart of the first section with the second subsection of the second section.

The second subsection is in particular shaped in such a way, that it has an extension, which in the inflated state is arranged in front of the passenger's head.

Additionally, it is suggested that the first section may comprise an arm receiving area, which is formed by connecting the first layer and the second layer to each other within the first section. Preferably, the connection line for forming this arm receiving area comprises to two connecting lines (sewing), which are arranged in an acute angle to each other, the acute angle being oriented towards the backrest.

By connecting the first layer and the second layer to each other within the periphery, the volume of the airbag in the inflated state is reduced. Such reduction of the volume of the inflated airbag may also be achieved by the connection for embodying the first and second folding line.

According to the invention, the first or each tether arrangement is fixed to the airbag, to the seat cushion with one end and to the backrest with the other end.

According to the invention the tether mechanism comprises at least one second tether arrangement, the second tether arrangement being fixed to the airbag, to the seat cushion with one end and to the backrest with the other end. By having a second tether arrangement, the inflated airbag can be brought and kept in such a position, that the airbag is held in front of the passenger. In particular, the fixing (connection) point of the first tether arrangement to the seat cushion is behind the fixing point of the second tether arrangement to the seat cushion, in particular at the lateral side of the seat cushion. Preferably, the fixing point of the second tether arrangement to the seat cushion is at the front of the seat cushion. The other ends of the tether arrangements are preferably connected to the backrest at an upper part of the backrest, preferably on top of the backrest near the head rest.

At least one tether arrangement extends in the inflated state along the front side of the inflated airbag. The tether arrangement is arranged on the outside of the airbag.

Each tether arrangement may be made of one single tether, which is usually made of a tensile fabric. If each tether arrangement comprises only one tether, the airbag module and the tether need to be assembled in the vehicle seat at the same time. Alternatively, each tether arrangement may be made of multiple tethers. Each tether is connected to the airbag with one end and to the seat cushion or backrest with the other end.

In particular, the first layer and the second layer are connected to each other at the location of the fixation of the tether arrangement to the airbag. This way, the volume of the inflated airbag is reduced, which can be achieved with the same sewing process for connecting the tether arrangement to the airbag. Also, this way the tether arrangement can be connected to the airbag after the first and the second layer are connected to each other at their periphery.

In a preferred embodiment at least one tether of a tether arrangement is fixed to the second section, preferably to the first subsection of the second section.

In a further embodiment, the vehicle seat arrangement comprises two airbag modules, wherein the two airbag modules are arranged on opposite sides of the backrest or seat cushion, so that in case of an accident, an airbag is arranged on both lateral sides of the passenger. In this regard, it might be sufficient, that only one of the airbags of the two airbag modules comprises a (sub)section, which is arranged in front of the chest/head of the passenger in the inflated state, while the airbag of the other airbag module is arranged laterally to the passenger and eventually in front of the shoulder of the passenger with a (sub)section.

The invention and the technical background are explained with regard to the figures, which show an exemplary embodiment of the invention in a schematic way. The figures show schematically
- Figure 1:: a side view on the first layer in an unfolded state,
- Figure 2:: a side view on the second layer in an unfolded state,
- Figure 3:: the airbag after a first folding step,
- Figure 4:: the airbag after a second folding step
- Figure 5:: a side similar to figure 1 in a folded and inflated state of the airbag,
- Figure 6:: a side view similar to figure 2 in a folded and inflated state and
- Figure 7:: a schematic top view of the folded and inflated airbag,
- Figure 8:: a top view of the folded and inflated airbag of figures 5 and 6,
- Figure 9:: a side view of a vehicle seat arrangement with the inflated airbag (but without tethers),
- Figure 10:: a top view of the vehicle seat arrangement of figure 9 with the inflated airbags and
- Figure 11:: a side view of a vehicle seat arrangement with an inflated airbag indicating the arrangement of tethers.

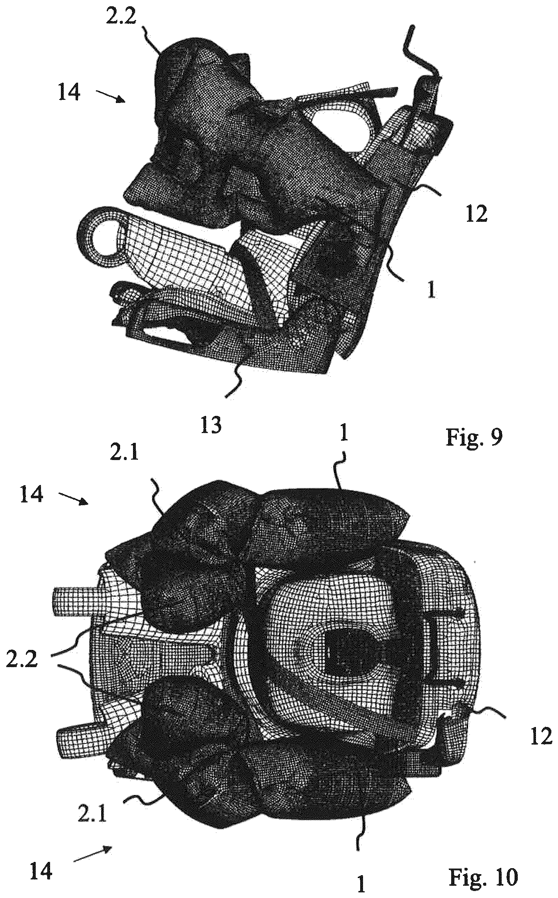

The vehicle seat arrangement shown in figure 9 and 10 comprises a vehicle seat with a backrest 12 and a seat cushion 13. Two airbag modules 3 are arranged on opposite lateral sides of the backrest 12. The airbag modules each comprise an airbag 14, respectively.

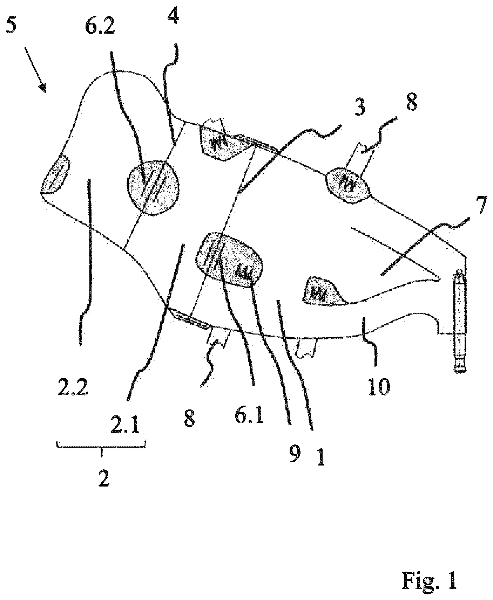

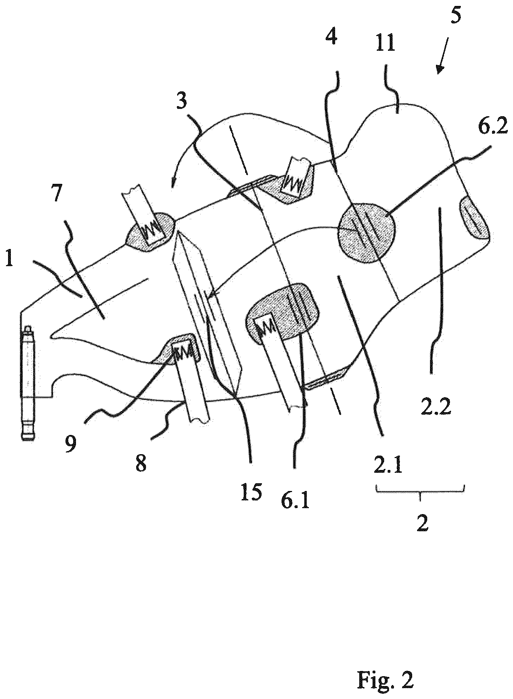

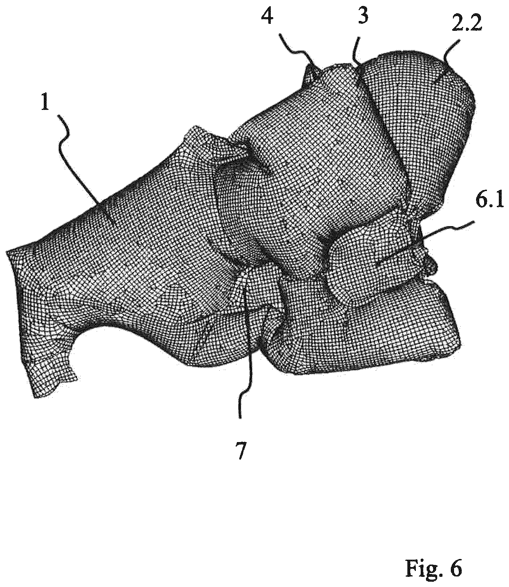

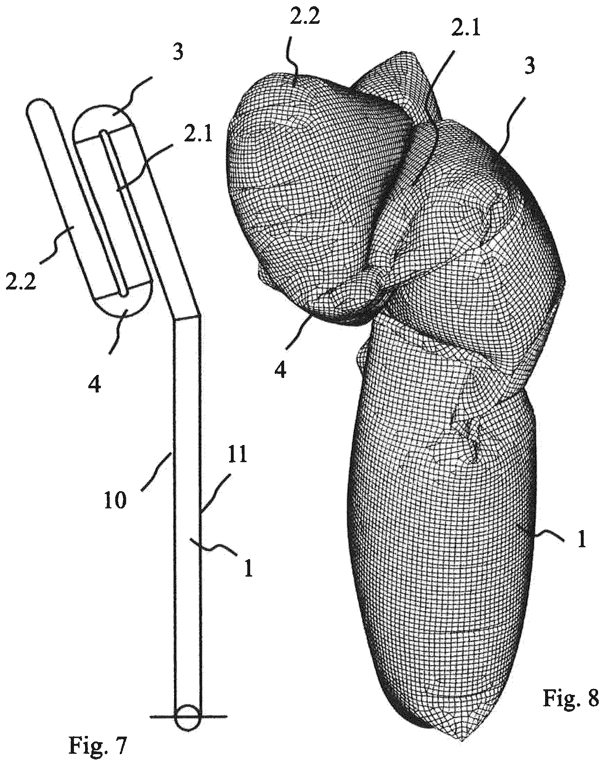

One airbag 14 is depicted in figures 1 to 8 and is made of two layers, a first layer 10 and a second layer 11, which have the same outer shape and which are connected at their periphery. The uninflated and not yet folded airbag is shown in figures 1 and 2, wherein figure 1 shows a view on the first layer 10 and figure 2 shows a view on the second layer 11.

The airbag comprises a first section 1, which is connected to the backrest 12 of the seat. The airbag further comprises a second section 2 made of a first subsection 2.1 and a second subsection 2.2. The subsection 2.2 has an end 5.

Furthermore, in the first section 1 an arm receiving area 7 is embodied by connecting the first layer 10 and the second layer 11 along a basically V-shaped connecting line.

Tethers 8 are connected at tether connection area 9 to the airbag, wherein the first layer 10 and the second layer 11 are connected to each other at the tether connection area 9.

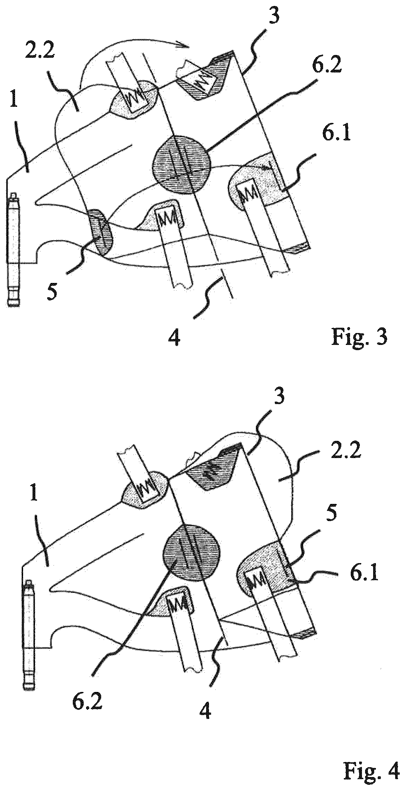

During production of the airbag, section 2 is folded on the first section 1 over folding line 3, as is indicated by the arrows in figure 2. The intermediate state after the first folding step is shown in figure 3.

Afterwards, subsection 2.2 is folded over a second folding line 4 onto the first subsection 2.1, wherein the second folding line 4, as is indicated by the arrows in figure 3. The final state after the second folding step is shown in figure 3.

For securing the first folding line 3 the first subsection 2.1 and the first section 1 are connected (i.e. by sewing) to each other at connection area 6.1, whereby also the first layer 10 and the second layer 11 of the first section 1 and of the first subsection 2.1 are connected to each other. At the same time the end 5 of the second subsection 2.2 is secured (sewed) in the first connection area 6.1 near the first folding line 3.

For securing the second folding line 4 the first subsection 2.1 and the second subsection 2.2 are connected to each other at the connection area 6.2, whereby also the first layer 10 and the second layer 11 of the first subsection 2.1 and the second subsection 2.2 are connected to each other. At the same time the second folding line 4 is secured to the first layer 10 within the first section 1, whereby the first layer 10 is connected to itself at the thus formed bending line 12.

The thus securely folded airbag is assembled in the backrest 12 of the seat arrangement.

During deployment, the gas flow from the first section 1 into the first subsection 2.1 is restricted by the connection area 6.1. Accordingly, the first section 1 inflates first completely, while the complete inflation of the first subsection 2.1 is postponed. Similar, the gas flow from the first subsection 2.1 to the second subsection 2.2 is restricted by the second connection area 6.2, so that the second subsection 2.2 inflates completely in a postponed manner.

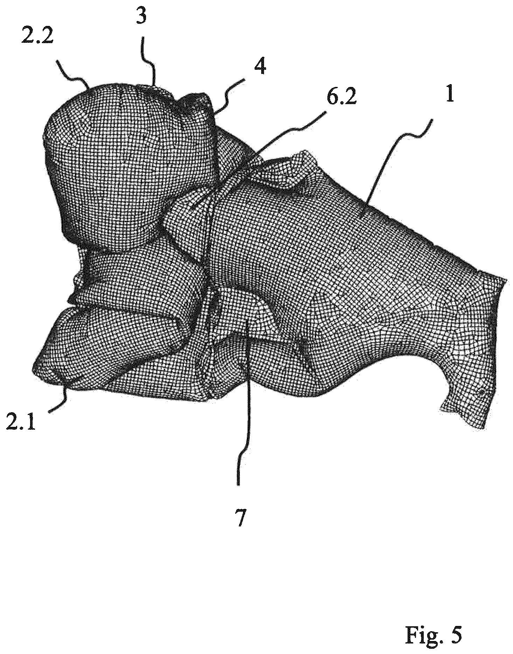

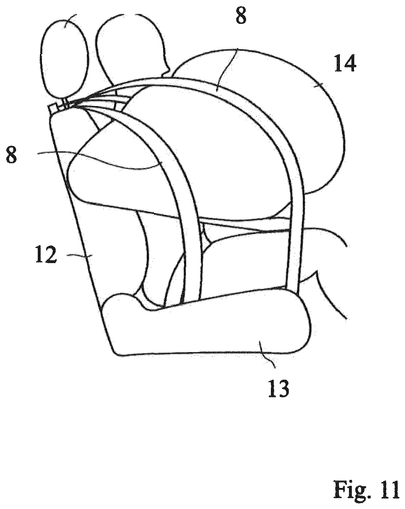

Figures 5 to 8 show the airbag in the inflated state. As can be seen from figure 10 in the inflated state the first subsection 1 is basically arranged laterally to the passenger, while the first subsection 2.1 is arranged in front of a shoulder of the passenger and the second subsection 2.2 is arranged in front of the chest/head of the passenger. In the example shown in figures 9 and 10 the tethers are not assembled. If tethers connecting the airbags 14 to the backrest 12 and the seat cushion 13 would be assembled, the second subsections 2.2 of the two airbags 14 would be held even more closely together in the inflated state. An example showing an exemplary arrangement of tethers 8 is indicated in figure 11.

As can be seen the first folding line 3 and the second folding line 4 basically extend in a vertical manner in the inflated state. Due to the first folding line 3 and the first connection area 6.1 the second section 2 unfolds after the first section 1 has been unfolded laterally to the passenger. With the second subsection 2.2 being arranged in front of the chest/head of the passenger there is sufficient protection in case of a forward movement of the passenger.

### Reference signs

- 1: first section
- 2: second section
- 2.1: first subsection
- 2.2: second subsection
- 3: first folding line
- 4: second folding line
- 5: end
- 6.1: first connection area
- 6.2: second connection area
- 7: arm receiving area
- 8: tether
- 9: tether connection area
- 10: first layer
- 11: second layer
- 12: backrest
- 13: seat cushion
- 14: airbag
- 15: bending line

## Claims

1. Vehicle seat arrangement for a motor vehicle, with
- a backrest (12),
- a seat cushion (13),
- at least one airbag module, the airbag module being arranged on a lateral side of the backrest (12) and/or seat cushion (13) and the at least one airbag module comprising at least one airbag (14), wherein the airbag (14) is made of a first layer (10) and a second layer (11), the first layer (10) facing an occupant when the airbag (14) is inflated, and
- a tether mechanism for the airbag module, the tether mechanism comprising at least one tether arrangement (8), the tether arrangement (8) being fixed at least to the airbag (14) and additionally to the seat cushion (13) and/or to the backrest (12), wherein the tether arrangement (8) is fixed to the airbag (14), to the seat cushion (13) with one end and to the backrest (12) with the other end,
**characterized in that**
- the first layer (10) and the second layer (11) of the airbag have the same shape and are connected to each other at least on the periphery,
- the airbag (14) has a first section (1) connected to the backrest (12) and/or seat cushion (13) and a second section (2), wherein in an uninflated but unrolled state of the airbag (14) the second section (2) is at least partly folded onto the first section (1) forming a first folding line (3), and **in that**
- the tether mechanism comprises at least one second tether arrangement (8), the second tether arrangement (8) being fixed to the airbag (14), to the seat cushion (13) with one end and to the backrest (12) with the other end.

2. Vehicle seat arrangement according to claim 1, wherein an end (5) of the second section (2) is connected to the first section (1).

3. Vehicle seat arrangement according to one of the preceding claims, wherein the second section (2) comprises a first subsection (2.1) and a second subsection (2.2), wherein in the uninflated but unrolled state of the airbag (14) the second subsection (2.2) is folded onto the first subsection (2.1) forming a second folding line (4).

4. Vehicle seat arrangement according to one of the preceding claims, wherein the first layer (10) is connected to itself within the first section (1), preferably along a vertically extending bending line (15).

5. Vehicle seat arrangement according to one of the preceding claims, wherein the second folding line (4) is connected to the first layer (10) within the first section (1).

6. Vehicle seat arrangement according to one of the preceding claims, wherein in an inflated state of the airbag (14) the first section (1) is located laterally to the passenger and in front of a shoulder of the passenger and wherein the second section (2) is located in front of the chest and/or head of the passenger.

7. Vehicle seat arrangement according to claim 6, wherein the first subpart (1.1) of the first section (1) is located laterally to the passenger, the second subpart (1.2) of the first section (1) is located in front of the shoulder of the passenger and wherein the second subsection (2.2) of the second section (2) is located in front of the chest and/or head of the passenger, the first subsection (2.1) of the second section (2) linking the second subpart (1.2) of the first section (1) with the second subsection (2.2) of the second section (2).

8. Vehicle seat arrangement according to one of the preceding claims, wherein the first layer (10) and second layer (11) are connected to each other within the first section (1) in order to form an arm receiving area (7).

9. Vehicle seat arrangement according to one of the preceding claims, wherein at the location of the fixation of the tether arrangement (8) to the airbag (14) the first layer (10) and the second layer (11) are connected to each other.

10. Vehicle seat arrangement according to one of the preceding claims, wherein at least one tether (8) of a tether arrangement is fixed to the second section (2), preferably to the first subsection (2.1) of the second section (2).

11. Vehicle seat arrangement according to one of the preceding claims, wherein two airbag modules are embodied, wherein the two air bag modules are arranged on opposite sides of the backrest (13).

## Patentansprüche

1. Fahrzeugsitzanordnung für ein Kraftfahrzeug, mit
- einer Rückenlehne (12),
- einem Sitzkissen (13),
- mindestens einem Airbagmodul, wobei das Airbagmodul an einer lateralen Seite der Rückenlehne (12) und/oder des Sitzkissens (13) angeordnet ist und das mindestens eine Airbagmodul umfassend mindestens einen Airbag (14), wobei der Airbag (14) aus einer ersten Schicht (10) und einer zweiten Schicht (11) hergestellt ist, wobei die erste Schicht (10) einem Insassen zugewandt ist, wenn der Airbag (14) aufgeblasen ist, und
- einem Haltegurtmechanismus für das Airbagmodul, der Haltegurtmechanismus umfassend mindestens eine Haltegurtanordnung (8), wobei die Haltegurtanordnung (8) mindestens an dem Airbag (14) und zusätzlich an dem Sitzkissen (13) und/oder an der Rückenlehne (12) befestigt ist, wobei die Haltegurtanordnung (8) an dem Airbag (14), an dem Sitzkissen (13) mit einem Ende und an der Rückenlehne (12) mit dem anderen Ende befestigt ist,
**dadurch gekennzeichnet, dass**
- die erste Schicht (10) und die zweite Schicht (11) des Airbags die gleiche Form aufweisen und mindestens an dem Umfang miteinander verbunden sind,
- der Airbag (14) einen ersten Abschnitt (1), der mit der Rückenlehne (12) und/oder dem Sitzkissen (13) verbunden ist, und einen zweiten Abschnitt (2) aufweist, wobei in einem nicht aufgeblasenen, aber ausgerollten Zustand des Airbags (14) der zweite Abschnitt (2) mindestens teilweise auf den ersten Abschnitt (1) gefaltet ist, wobei eine erste Faltlinie (3) ausgebildet wird, und **dass**
- der Haltegurtmechanismus mindestens eine zweite Haltegurtanordnung (8) umfasst, wobei die zweite Haltegurtanordnung (8) an dem Airbag (14), an dem Sitzkissen (13) mit einem Ende und an der Rückenlehne (12) mit dem anderen Ende befestigt ist.

2. Fahrzeugsitzanordnung nach Anspruch 1, wobei ein Ende (5) des zweiten Abschnitts (2) mit dem ersten Abschnitt (1) verbunden ist.

3. Fahrzeugsitzanordnung nach einem der vorstehenden Ansprüche, wobei der zweite Abschnitt (2) einen ersten Teilabschnitt (2.1) und einen zweiten Teilabschnitt (2.2) umfasst, wobei der zweite Teilabschnitt (2.2) in dem nicht aufgeblasenen, aber ausgerollten Zustand des Airbags (14) auf den ersten Teilabschnitt (2.1) gefaltet ist, wobei eine zweiten Faltlinie (4) ausgebildet wird.

4. Fahrzeugsitzanordnung nach einem der vorstehenden Ansprüche, wobei die erste Schicht (10) innerhalb des ersten Abschnitts (1), vorzugsweise entlang einer sich vertikal erstreckenden Biegelinie (15), mit sich selbst verbunden ist.

5. Fahrzeugsitzanordnung nach einem der vorstehenden Ansprüche, wobei die zweite Faltlinie (4) mit der ersten Schicht (10) innerhalb des ersten Abschnitts (1) verbunden ist.

6. Fahrzeugsitzanordnung nach einem der vorstehenden Ansprüche, wobei in einem aufgeblasenen Zustand des Airbags (14) sich der erste Abschnitt (1) lateral zu dem Beifahrer und vor einer Schulter des Beifahrers befindet und wobei sich der zweite Abschnitt (2) vor der Brust und/oder dem Kopf des Beifahrers befindet.

7. Fahrzeugsitzanordnung nach Anspruch 6, wobei sich der erste Teilbereich (1.1) des ersten Abschnitts (1) lateral zu dem Beifahrer befindet, sich der zweite Teilbereich (1.2) des ersten Abschnitts (1) vor der Schulter des Beifahrers befindet und wobei sich der zweite Teilabschnitt (2.2) des zweiten Abschnitts (2) vor der Brust und/oder dem Kopf des Beifahrers befindet, wobei der erste Teilabschnitt (2.1) des zweiten Abschnitts (2) den zweiten Teilbereich (1.2) des ersten Abschnitts (1) mit dem zweiten Teilabschnitt (2.2) des zweiten Abschnitts (2) verknüpft.

8. Fahrzeugsitzanordnung nach einem der vorstehenden Ansprüche, wobei die erste Schicht (10) und die zweite Schicht (11) innerhalb des ersten Abschnitts (1) miteinander verbunden sind, um einen Armaufnahmebereich (7) auszubilden.

9. Fahrzeugsitzanordnung nach einem der vorstehenden Ansprüche, wobei an der Stelle der Befestigung der Haltegurtanordnung (8) an dem Airbag (14) die erste Schicht (10) und die zweite Schicht (11) miteinander verbunden sind.

10. Fahrzeugsitzanordnung nach einem der vorstehenden Ansprüche, wobei an dem zweiten Abschnitt (2), vorzugsweise an dem ersten Teilabschnitt (2.1) des zweiten Abschnitts (2), mindestens ein Haltegurt (8) einer Haltegurtanordnung befestigt ist.

11. Fahrzeugsitzanordnung nach einem der vorstehenden Ansprüche, wobei zwei Airbagmodule enthalten sind, wobei die zwei Airbagmodule auf gegenüberliegenden Seiten der Rückenlehne (13) angeordnet sind.

## Revendications

1. Dispositif de siège de véhicule pour un véhicule à moteur, avec
- un dossier (12),
- un coussin de siège (13),
- au moins un module de sac gonflable, le module de sac gonflable étant disposé sur un côté latéral du dossier (12) et/ou du coussin de siège (13) et l'au moins un module de sac gonflable comprenant au moins un sac gonflable (14), dans lequel le sac gonflable (14) est constitué d'une première couche (10) et d'une seconde couche (11), la première couche (10) faisant face à un occupant lorsque le sac gonflable (14) est gonflé, et
- un mécanisme d'attache pour le module de sac gonflable, le mécanisme d'attache comprenant au moins un dispositif d'attache (8), le dispositif d'attache (8) étant fixé au moins au sac gonflable (14) et en outre au coussin de siège (13) et/ou au dossier (12), dans lequel le dispositif d'attache (8) est fixé au sac gonflable (14), au coussin de siège (13) avec une extrémité et au dossier (12) avec l'autre extrémité,
**caractérisé en ce que**
- la première couche (10) et la seconde couche (11) du sac gonflable ont la même forme et sont reliées l'une à l'autre au moins sur la périphérie,
- le sac gonflable (14) possède une première section (1) reliée au dossier (12) et/ou au coussin de siège (13) et une seconde section (2), dans lequel, dans un état non gonflé mais non enroulé du sac gonflable (14), la seconde section (2) est au moins partiellement repliée sur la première section (1), formant une première ligne de pliage (3), et **en ce que**
- le mécanisme d'attache comprend au moins un second dispositif d'attache (8), le second dispositif d'attache (8) étant fixé au sac gonflable (14), au coussin de siège (13) avec une extrémité et au dossier (12) avec l'autre extrémité.

2. Dispositif de siège de véhicule selon la revendication 1, dans lequel une extrémité (5) de la seconde section (2) est reliée à la première section (1).

3. Dispositif de siège de véhicule selon l'une des revendications précédentes, dans lequel la seconde section (2) comprend une première sous-section (2.1) et une seconde sous-section (2.2), dans lequel, dans l'état non gonflé mais non enroulé du sac gonflable (14), la seconde sous-section (2.2) est repliée sur la première sous-section (2.1), formant une seconde ligne de pliage (4).

4. Dispositif de siège de véhicule selon l'une des revendications précédentes, dans lequel la première couche (10) est reliée à elle-même à l'intérieur de la première section (1), de préférence le long d'une ligne de pliage (15) s'étendant verticalement.

5. Dispositif de siège de véhicule selon l'une des revendications précédentes, dans lequel la seconde ligne de pliage (4) est reliée à la première couche (10) à l'intérieur de la première section (1).

6. Dispositif de siège de véhicule selon l'une des revendications précédentes, dans lequel, dans l'état gonflé du sac gonflable (14), la première section (1) est située latéralement par rapport au passager et devant une épaule du passager, et dans lequel la seconde section (2) est située devant la poitrine et/ou la tête du passager.

7. Dispositif de siège de véhicule selon la revendication 6, dans lequel la première sous-partie (1.1) de la première section (1) est située latéralement par rapport au passager, la seconde sous-partie (1.2) de la première section (1) est située devant l'épaule du passager et dans lequel la seconde sous-section (2.2) de la seconde section (2) est située devant la poitrine et/ou la tête du passager, la première sous-section (2.1) de la seconde section (2) reliant la seconde sous-partie (1.2) de la première section (1) à la seconde sous-section (2.2) de la seconde section (2).

8. Dispositif de siège de véhicule selon l'une des revendications précédentes, dans lequel la première couche (10) et la seconde couche (11) sont reliées l'une à l'autre à l'intérieur de la première section (1) afin de former une zone de réception de bras (7).

9. Dispositif de siège de véhicule selon l'une des revendications précédentes, dans lequel la première couche (10) et la seconde couche (11) sont reliées l'une à l'autre à l'endroit où le dispositif d'attache (8) est fixé au sac gonflable (14).

10. Dispositif de siège de véhicule selon l'une des revendications précédentes, dans lequel au moins une attache (8) d'un dispositif d'attache est fixée à la seconde section (2), de préférence à la première sous-section (2.1) de la seconde section (2).

11. Dispositif de siège de véhicule selon l'une des revendications précédentes, dans lequel deux modules de sac gonflable sont incorporés, dans lequel les deux modules de sac gonflable sont disposés sur des côtés opposés du dossier (13).
